# EUROPÄISCHE PATENTANMELDUNG

(11) **EP 0 773 418 A1**
(43) Veröffentlichungstag der Anmeldung: **14.05.1997**
(21) Anmeldenummer: 96117559.3
(22) Anmeldetag: 02.11.1996
(51) Int. Cl.: F26B 25/12

(54) **Tür für Autoklaven, autoklavierbare Gefriertrocknungsanlagen, Gefriertrocknungsanlagen etc.**

(30) Priorität: 10.11.1995 DE 19541947
(71) Anmelder: Hof, Hans-Georg, 35075 Gladenbach-Rüchenbach (DE)
(72) Erfinder: Battenberg, Ralf Dip. Ing.(FH), 35102 Lohra-Damm (DE); Wagner, Alexander Dipl. Ing.(FH), 35043 Marburg-Ronhausen (DE)
(74) Vertreter: WALTHER, WALTHER & HINZ Patentanwälte

(57) **Zusammenfassung**

Gegenstand der Erfindung ist eine Druckkammer, eines Autoklaven, einer autoklavierbaren Gefriertrocknungsanlage, einer Gefriertrocknungsanlage, einer Sterilisationsanlage oder dergleichen mit einer in einer Vorderwand (2) der Druckkammer angeordneten Beschickungsöffnung (4), welche durch ein vertikal verschiebbares, beabstandet von der Vorderwand (2) angeordnetes Türblatt (6) verschließbar ist, das mittels mindestens einer zwangsangetriebenen, mit dem Türblatt (6) in Wirkverbindung stehenden Stange (10) vertikal verfahrbar ist. Eine Druckkammer zu schaffen, deren Vorderwand leicht zu reinigen oder zu sterilisieren ist, wird durch eine Andrückvorrichtung erreicht, die das Türblatt (6) in seiner Verschließposition quer zur Bewegungsrichtung gegen die Vorderwand (2) drückt, um die Beschickungsöffnung (4) zu verschließen und so gegen Vakuum und gegen Überdruck in der Druckkammer abzudichten.

## Beschreibung

Tür für Autoklaven, autoklavierbare Gefriertrocknungsanlagen, Gefriertrocknungsanlagen etc.

Die vorliegende Erfindung betrifft eine Druckkammer einer Cefriertrocknungsanlage, einer autoklavierbaren Gefriertrocknungsanlage, eines Autoklaven, einer Sterilisationsanlage oder dergleichen mit einer in einer Vorderwand der Druckkammer angeordneten Beschickungsöffnung, welche durch ein vertikal verschließbares, beabstandet von der Vorderwand angeordnetes Türblatt verschließbar ist, und mit mindestens einer Andrückvorrichtung, die das Türblatt in ihrer Verschließposition quer zur Bewegungsrichtung gegen die Vorderwand drückt, um die Beschickungsöffnung zu verschließen.

Druckkammern von Autoklaven, Gefriertrocknungsanlagen, autoklavierbaren Gefriertrocknungsanlagen, Sterilisationsanlagen oder dergleichen sind verschließbare, auf Über- oder Unterdruck geprüfte Behälter, in denen das Gefriertrocknungsverfahren, das Sterilisationsverfahren oder dergleichen durchgeführt wird. In beiden Verfahren besteht das Problem, daß die Druckkammer zum Austauschen des Inhalts der Druckkammer geöffnet werden muß. Damit der Innenraum hierbei innen nicht unnötig verunreinigt wird, bzw. damit die beim Gefriertrocknen vorgekühlten Inneneinbauten der Druckkammern sich nicht unnötig aufheizen oder bereifen, ist es vorteilhaft, die Beschickungsöffnung möglichst klein auszuführen und möglichst nur kurz zu öffnen.

Hierzu ist in der EP 0 204 870 eine Druckkammer mit Hauptschließtür und Zugangsöffnung vorgeschlagen worden, deren Beschickungsöffnung mit einer vertikal verschiebbaren Tür verschließbar ist. Zur druckdichten Verriegelung ist die verschiebbare Tür im Querschnitt keilförmig ausgebildet und kann in eine korrespondierend ausgebildete Aufnahme mittels einer hydraulisch angetriebenen Kolbenstange gedrückt werden. Um ein Verkanten der Schiebetür zu verhindern, ist diese in zwei seitlich der Beschickungsöffnung angeordneten Führungsstangen geführt.

Beim Verschließen der Tür wird diese in die Aufnahme eingeführt und kommt, noch bevor sie ihre endgültige Verriegelungspositon erreicht hat, mit der etwas vorstehenden Gummidichtung in Berührung. Von diesem Moment an, bis zu dem Zeitpunkt, in dem die Tür ihre Verriegelungsposition erreicht hat, scheuert die Tür an der Gummidichtung, so daß an dieser ein großer Verschleiß auftritt. Eine derart beanspruchte Dichtung muß häufig ausgewechselt werden und kann zu Leckagen führen, was gleichzusetzen ist mit einem Produktverlust.

Derartige Autoklaven, Gefriertrocknungsanlagen, Sterilisationsanlagen usw. werden häufig zur verfahrenstechnischen Behandlung/Gefriertrocknung von Arzneimitteln oder medizinischen Präperaten und/oder zum Sterilisieren von medizinischen Geräten und/oder Verbrauchsmaterialien eingesetzt. Alle diese Anwendungen erfordern einen hohen Grad an Sauberkeit, teilweise sogar Sterilität im Arbeitsbereich. Allerdings ist es schwierig, die aus der EP 0 204 870 bekannte Druckkammer für Gefriertrocknungsanlagen, Sterilisationsanlagen oder dergleichen im Bereich der Tür sauber zu halten oder gar zu sterilisieren, weil hier sehr viele Bauteile mit Ecken und Nischen vorhanden sind, und weil hier sehr viele aufeinander reibende Bauteile existieren, die einen Abrieb und somit eine Verschmutzung erzeugen.

Aus der DE-AS 10 15 464 ist ein Glühofen mit einer heb- und senkbaren Tür bekannt, welche mit seitlichen Ansätzen versehen ist, die auf am Ofen angeordnete Schrägflächen auflaufen, sobald die Tür sich ihrer unteren Endlage nähert. Hierdurch wird die Tür gegen die Beschickungsöffnung geführt. Aufgrund der vielen Einzelteile, die teilweise gegeneinander beweglich sind, ist es praktisch unmöglich diese Ofentür sauber und steril zu halten.

Davon ausgehend liegt der Erfindung die Aufgabe zugrunde, eine Druckkammer der eingangs genannten Art zu schaffen, die im Bereich der Tür keine Verschmutzung erzeugt und die gut zu reinigen ist.

Als technische Lösung dieser Aufgabe wird erfindungsgemäß vorgeschlagen, eine Druckkammer der eingangs genannten Art dahingehend weiterzubilden, daß die Andrückvorrichtung mindestens zwei seitlich des Türblattes angeordnete Exzenter aufweist, deren Exzeterscheiben so angeordnet sind, daß sie mit dem Türblatt in Eingriff bringbar sind.

Eine nach dieser technischen Lehre ausgebildete Druckkammer hat den Vorteil, daß im Türbereich nur noch wenige Einzelteile vorhanden sind, die keine bzw. nur wenige Kanten und Nischen aufweist, so daß die Druckkammer auch von außen leicht zu reinigen ist. Aufgrund des von der Vorderwand beabstandeten Türblattes und aufgrund des Andrückmechanismus kann die Vorderwand mit einer ebenen Oberfläche ausgeführt werden, die ebenfalls leicht und gut zu reinigen ist.

Ein weiterer, technischer Vorteil der vorliegenden Erfindung liegt darin, daß das Türblatt nunmehr quer zu seiner Bewegungsrichtung gegen die Vorderwand und somit gegen die Dichtung gedrückt wird und somit ein Scheuern des Türblattes an der Dichtung entfällt. Dies erhöht die Lebensdauer der Dichtung und gewährt ein sicheres Abdichten der öffnung. Darüber hinaus kann auch kein Abrieb mehr auftreten, der den Sterilraum verschmutzt.

Die Exzenter haben weiterhin den Vorteil, daß das Türblatt vor die Beschickungsöffnung gefahren werden kann, ohne daß sie hierbei mit anderen Bauteilen in Berührung kommt, und daß durch Verdrehen des Exzenters das Türblatt quer zur Bewegungsrichtung gegen die Vorderwand der Druckkammer gedrückt wird, um die Beschickungsöffnung zu verschließen. Hierbei wird jeglicher Abrieb aufgrund von aneinander scheuernden Oberflächen vermieden und gleichzeitig wird sichergestellt, daß das Türblatt mit der erforderlichen Kraft gegen die Vorderwand gedrückt wird, um in der Druckkammer das gewünschte Vakuum bzw. den gewünschten Druck realisieren zu können.

In einer bevorzugten Weiterbildung ist zwischen dem Türblatt und der Exzenterscheibe ein Abrollelement vorgesehen. Hierdurch wird sichergestellt, daß der Exzenter nicht auf dem Türblatt reibt und somit einen Abrieb erzeugt, sondern daß die Exzenterscheibe mittels des Abrollelementes auf dem Türblatt abrollt, wodurch keinerlei Abrieb erzeugt wird. Auch hierdurch wird den Anforderungen eines Sterilraums, in denen die Autoklaven, Gefriertrocknungsanlagen, autoklavierbaren Gefriertrochnungsanlagen oder Sterilisationsanlagen zum Einsatz kommen, Genüge getan.

Die Herstellung dieses Abrollelementes aus einem gehärteten, insbesondere randschichtgehärteten Edelstahl, trägt weiter dazu bei, daß kein Abrieb beim öffnen oder Verschließen der Tür entsteht und erhöht darüber hinaus die Lebensdauer der Anlage.

In einer besonderen Ausführungsform ist zwischen dem Abrollelement und der Exzenterscheibe ein Gleitlager ausgebildet. Um sicherzustellen, daß das im Gleitlager verwendete Gleitmittel nicht in den Sterilraum bzw. in den Innenraum der Druckkammer gelangt, Ist der zwischen der Exzenterscheibe und dem Abrollelement ausgebildete Lagerspalt gekapselt.

In einer besonders bevorzugten Ausführungsform ist der Exzenter in seiner Verriegelungsposition zwischen 0° und 90°, vorzugsweise 5° überdreht. Um der Gefahr, daß die Andrückvorrichtung sich zum Beispiel aufgrund von Vibrationen der Druckkammer oder dergleichen von alleine öffnet oder der Gefahr, daß sich die Tür bei Stromausfall öffnet, zu begegnen, ist der Exzenter überdreht. Das heißt, der Exzenter verharrt nicht in der Position, in der der Exzenter die maximale Exzentrizität aufweist, sondern er wird um einige Winkelgrade weitergedreht. Hierdurch wird sichergestellt,daß sich die Andrückvorrichtung nicht versehentlich, zum Beispiel durch Vibrationen, Stromausfall oder dergleichen, öffnet.

Als weitere technische Lösung dieser Aufgabe wird erfindungsgemäß vorgeschlagen, eine Druckkammer der eingangs genannten Art dahingehend weiterzubilden, daß das Türblatt mittels mindestens einer zwangsangetriebenen, mit dem Türblatt in Wirkverbindung stehenden Stange vertikal verfahrbar ist, wobei die Stange in einem Lager axial verschiebbar gelagert und in diesem präzise geführt ist, und wobei die Stange aus einem elastischen Material hergestellt ist.

Eine nach dieser technischen Lehre gefertigte Druckkammer hat den Vorteil, daß die Stange eine Doppelfunktion übernimmt: erstens ist das Türblatt an der Stange befestigt und wird von dieser auf und ab bewegt, und zweitens wird das Türblatt durch die präzise in den Lagern geführte Stange in einer definierten Position gehalten. Dabei wird das Türblatt vorzugsweise in einem gewissen Abstand vor der Vorderwand gehalten, so daß drittens die Stange gleichzeitig als Rückstellfeder dient. Durch die Übernahme von drei Funktionen in einem Bauteil, reduziert sich die Gesamtzahl der Bauteile und somit wird auch hierdurch ein Beitrag zur Lösung der oben genannten Aufgabe geleistet.

Durch eine Stange aus einem elastischen Material wird erreicht, daß die Stangen in der Phase, in der die Andrückvorrichtung das Türblatt gegen die Vorderwand der Druckkammern drückt, ein wenig verbogen werden, so daß das zuvor von der Vorderwand mit Dichtung beabstandete Türblatt nunmehr an dieser anliegt. Dabei ist die Stange optimal elastisch auf die Verschiebbarkeit und außerschwerpunktartigen Aufhängung des Türblattes ausgelegt, so daß die Verbiegung der Stange nur in deren elastischem Bereich erfolgt, da eine in den plastischen Bereich hineinreichende Verbiegung eine plastische Verformung der Stange zur Folge hätte, daß ein Funktionsverlust eintritt (das Türblatt reibt bei Auf- und Abbewegung an der Dichtung).

Es versteht sich, daß die erfindungsgemäße Stange nicht nur eine runde, aus einem Vollmaterial hergestellte Stange sein kann, sondern daß alternativ auch hohle Stangen (Rohre), Stangen mit einem viereckigen Querschnitt, oder irgendwie ausgebildete Profile eingesetzt werden können.

Als elastisches Material im Sinne dieser Erfindung können Metalle, insbesondere Edelstahl oder auch Kunststoffe eingesetzt werden.

In einer Weiterbildung der erfindungsgemäßen Druckkammer wird das Türblatt von einem Hubantrieb auf und ab gefahren. Hierzu sind an dem Türblatt zwei Stangen mit mechanisch, daran gekoppelten Hubantrieben vorgesehen.

Hierdurch wird erreicht, daß der gesamte Bewegungsmechanismus aus dem Beschickungsbereich ferngehalten wird und In den oberen Bereich der Vorderwand der Druckkammer verlagert wird. Dies trägt weiter zur vereinfachten Reinhaltung der Vorderwand bei, insbesondere da dieser obere Bereich mit einer Schutzverkleidung abgedeckt werden kann, die ebenfalls leicht zu reinigen ist.

Die erfindungsgemäßen Gefriertrocknungsanlagen, Autoklaven, Sterilisationsanlagen oder dergleichen werden vornehmlich mit Lebensmitteln, Arzneimitteln, Krankenhausartikeln oder dergleichen bestückt, bei denen große Anforderungen an die Hygiene gestellt werden. Dies betrifft nicht nur das Innere der Druckkammer, sondern auch den der Druckkammer vorgelagerten Raum, von dem aus die Druckkammer beschickt wird.

Damit auch dieser Vorraum, in dem die Vorderwand der Druckkammer steht, gut gereinigt oder sterilisiert werden kann, ist die Vorderwand mit Ausnahme des Türbereiches mit einer Schutzverkleidung versehen, hinter der die beweglich gelagerten oder mit Abrieb behafteten Funktionselemente angeordnet sind. Diese Schutzverkleidung ist vorzugsweise so staubdicht und gasdicht ausgeführt, daß hinter der Schutzverkleidung auftretender Schmutz, Abrieb, Staub oder der gleichen nicht in den Vorraum gelangen kann. Gleichzeitig ist die Schutzverkleidung vorzugsweise mit glatten und großen Oberflächen versehen, damit eine einfache Reinigung oder Sterilisation erfolgen kann.

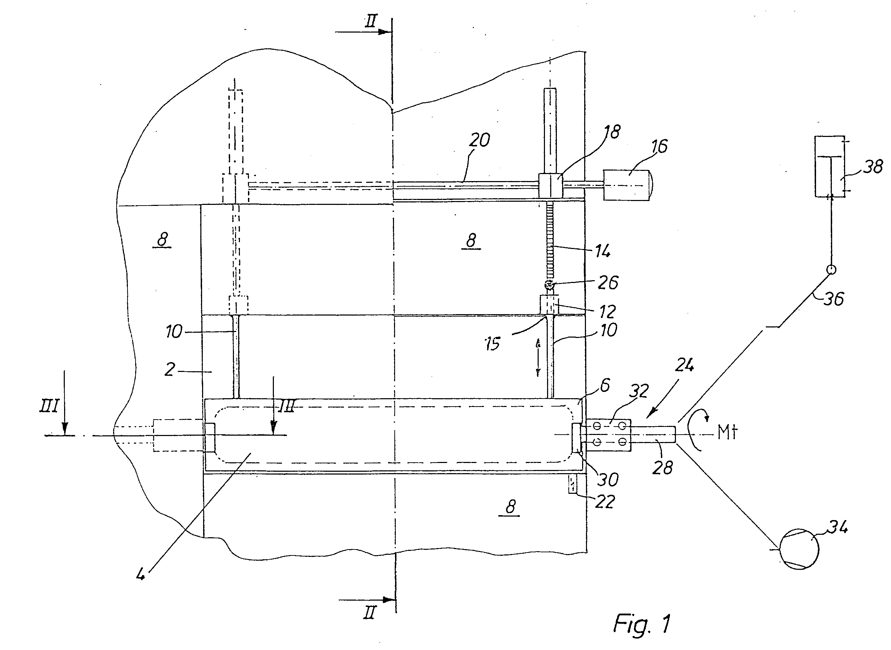

Weitere Vorteile der erfindungsgemäßen Vorrichtung ergeben sich aus der Beschreibung der Ausführungsform und der beigefügten Zeichnung. Ebenso können die vorstehend genannten und die weiter aufgeführten Merkmale erfindungsgemäß jeweils einzeln oder in beliebigen Kombinationen miteinander verwirklicht werden. Die erwähnten Ausführungsformen sind nicht als abschließende Aufzählung zu verstehen, sondern haben vielmehr beispielhaften Charakter. Ausführungsformen der Erfindung sind in den Figuren 1 bis 4 der Zeichnungen dargestellt und werden im folgenden näher erläutert:
- Figur 1: zeigt eine Frontansicht eines Teils einer erfindungsgemäßen Druckkammer;
- Figur 2: zeigt eine Seitenansicht der Druckkammer gemäß Figur 1, geschnitten entlang Linie II - II in Figur 1;
- Figur 3: zeigt eine Draufsicht der Druckkammer gemäß Figur 1, geschnitten entlang Linie III - III in Figur 1;
- Figur 4: zeigt den Exzenter der Druckkammer gemäß Figur 1, geschnitten entlang Linie IV - IV in Figur 3.

Die einzelnen Figuren der Zeichnung zeigen den erfindungsgemäßen Gegenstand teilweise stark schematisiert und sind nicht maßstäblich zu verstehen. Dabei sind die Gegenstände der einzelnen Figuren teilweise stark überproportional vergrößert dargestellt, damit ihr Aufbau besser gezeigt werden kann.

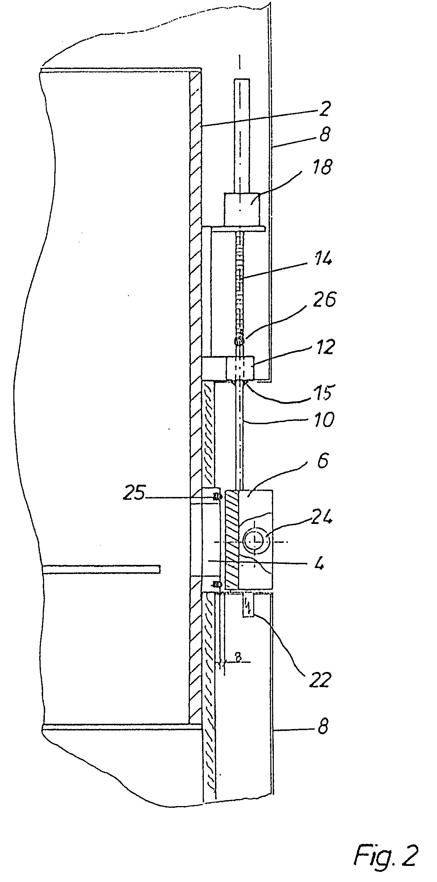

In den Figuren 1 und 2 ist in einer geschnittenen Darstellung ein Teilbereich eines Vakuum- und Druckbehälters einer Gefriertrocknungsanlage dargestellt. Dieser, auch als Druckkammer bezeichnete Vakuum- und Druckbehälter, weist in einer Vorderwand eine Beschickungsöffnung 4 auf, welche mit einem vertikal verfahrbaren Türblatt 6 verschließbar ist. Diese Beschickungsöffnung 4 ist so ausgelegt, daß die in der Gefriertrocknungsanlage zu bearbeitenden Gegenstände gerade eben hindurchpassen, so daß während des Beschickens möglichst wenig Wärme und/oder reinheitsklassenrelevante Partikel in das Innere der Druckkammer gelangen kann.

In dieser Gefriertrocknungsanlage werden vornehmlich Lebens- oder Arzneimittel gefriergetrocknet. Damit diese Lebens- oder Arzneimittel keinen Schaden nehmen ist es daher erforderlich, daß auch der Raum vor der Beschickungsöffnung einen hohen Reinheitsgrad aufweist, um den hohen Anforderungen der Lebens- und Arzneimittelindustrie bezüglich der Sauberkeit zu genügen. In den meisten Anwendungsfällen ist der Vorraum sogar zu sterilisieren.

Damit der Vorraum und insbesondere die Vorderwand 2 der Druckkammer leicht sauber zu halten ist, ist diese mit einer Schutzverkleidung versehen. Diese Schutzverkleidung umfaßt eine Anzahl von Schutzblechen 8, hinter denen der Antrieb des vertikal beweglichen Türblattes 6 angeordnet ist. Die Schutzbleche 8 sind vollkommen geschlossen ausgebildet und sind in ihrem Kontaktbereich zur Vorderwand 2 mittels einer Dichtung abgedichtet, so daß weder Staub oder Schmutz noch Oel oder Abrieb in den Vorraum gelangen kann.

Damit das Türblatt 6 im ungeschützten Türbereich mit der Vorderwand 2 keinerlei Berührungsflächen aufweist, wird es mittels zweier Stangen 10 parallel zur Vorderwand 2 gehalten und etwa 4 mm davon beabstandet. Jede Stange 10 ist in einem hinter dem Schutzblech 8 angeordneten Gleitlager 12 axial verschieblich gelagert. An dem aus dem Gleitlager 12 herausragenden Ende der Stange 10 schließt sich eine Spindel 14 an, die über einen von einem Elektromotor 16 angetriebenen Spindelhubantrieb 18 auf und nieder bewegt werden kann. Mit der Spindel 14 wird so das Türblatt 6 auf und nieder bewegt. Beide Spindelhubantriebe 18 sind über eine Welle 20 mechanisch gekoppelt.

Die in den Gleitlagern 12 geführten Stangen 10 verschieben das Türblatt 6 parallel zur Vorderwand 2. Dabei sind die Stangen 10 stark genug um einerseits eine vertikal genaue Führung des Türblattes 6 parallel zur Vorderwand 2 und andererseits um eine außerschwerpunktartige Aufhängung des Türblattes 6 zu ermöglichen.

Sobald das Türblatt 6 vollständig nach unten gefahren ist, wird dieses durch einen Initiator 22 gemeldet. Nun wird das Türblatt 6 quer zur Bewegungsrichtung mittels zweier Exzenter 24 gegen die Vorderwand 2 gedrückt. Dabei ist das Türblatt 6 so dimensioniert, daß an den Schmalseiten jeweils ein Exzenter ausreicht, um dieses vakuumfest und überdruckfest zu verriegeln. Hierzu wird das Türblatt 6 um cirka 6 mm horizontal verschoben, und gegen die um die Beschickungsöffnung 4 herum vorgesehene Silikonprofildichtung gedrückt. Dabei sind die Stangen 10 elastisch genug ausgebildet, um die bei der Verschiebung von cirka 6 mm auftretenden Querkräfte ohne bleibende plastische Verformung aufzunehmen.

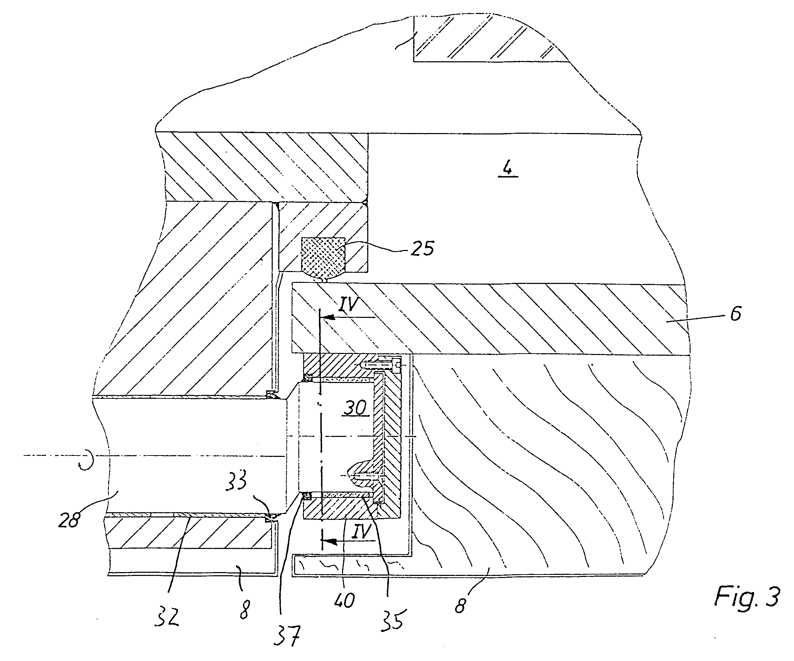

Wie der Figur 3 deutlich zu entnehmen ist, umfaßt der Exzenter 24 eine Exzenterwelle 28, an die eine Exzenterscheibe 30 außermittig angebracht ist. Die Exzenterwelle 28 ist in einem Gleitlager 32 gelagert und wird Wahlweise von einem Momentenantrieb über einen Drehantrieb 34 oder indirekt über einen Hebelarm 36 und einen Linearantrieb 38 angetrieben. Dabei ist sowohl das Gleitlager 32, als auch der Antrieb von einem Schutzblech 8 über eine Dichtung 33 hermetisch abgedichtet. Auch das Gleitlager 35 ist so über eine Dichtung 37 gekapselt, daß keine Partikel, die den Sterilraum verunreinigen, austreten können.

Damit die Exzenterscheibe 30 beim Verriegeln der Tür 6 nicht unmittelbar an dieser entlangscheuert und einen unerwünschten Abrieb erzeugt, ist auf die Exzenterscheibe 30 ein Abrollelement 40 aufgesetzt. Zwischen dem Abrollelement 40 und der Exzenterscheibe 30 ist ein Gleitlager 35 ausgebildet, welches mittels einer Ringdichtung 37 gekapselt ist, so daß keine Partikel austreten können.

Beim Verriegeln der Tür durch den Exzenter 24 rollt das Abrollelement 40 auf dem Türblatt 6 und auf der Exzenterscheibe 30, so daß eine abriebfreie Abrollbewegung des Exzenters 24 auf dem Türblatt 6 erfolgt.

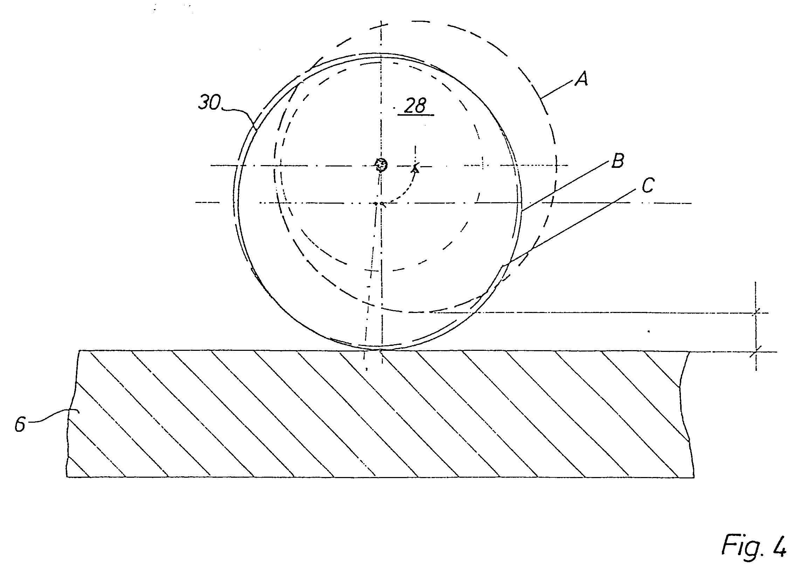

Anhand der Figur 4 wird im folgenden der Verschließvorgang näher erläutert:

Zum Verschließen mit dem Türblatt 6 wird dieses über den Spindelhubantrieb 18 in die unterste Position gefahren. Der Initiator 22 meldet dem Drehanstrieb 34 oder dem Linearantrieb 38 das Erreichen der Verriegelungsposition. Sobald das Türblatt 6 nun in der Verriegelungsposition ist, setzt der Exzenterantrieb ein und verdreht die Exzenterwelle 28. Hierdurch wird die Exzenterscheibe 30 zusammen mit dem Abrollelement 40 gegen das Türblatt 6 gedrückt, so daß dieses horizontal verschoben wird. Die Postion A in Figur 4 gibt die Stellung des Exzenters an, während das Türblatt 6 vertikal verfahren werden kann.

Nachdem die Exzenterwelle 28 um 90° gedreht wurde, liegt der Punkt der maximalen Exzentrizität der Exzenterscheibe 30 am Türblatt 6 an. Während des Verdrehens der Exzenterwelle 28 um 90°, wurde das Türblatt 6 also um cirka 6 mm horizontal verschoben, so daß dieses nun mit Kraft (Dichtungsvorspannung + Überdruckbelastung + Sicherheit) gegen die Dichtung 25 gepreßt wird. Damit die Tür auch bei Energieausfall mechanisch verriegelt ist und die Türverriegelung in einem sicheren Zustand verharrt, wird der Exzenter 24 um weitere 5° verdreht (Position C), so daß der Exzenter 24 überknickt ist und eine stabile und selbsthemmende Lage einnimmt. In dieser Position C bleibt die Beschickungsöffnung 4 auch bei Energieausfall hoch vakuumdicht und überdruckdicht verriegelt, da der Exzenter 24 nur durch Aufbringen einer Kraft aus seiner überknickten Position C herausbewegt werden kann. Somit ist ein unbeabsichtigtes öffnen, zum Beispiel bei Stromausfall, zuverlässig verhindert.

Sämtliche Teile mit Ausnahme des Türblattes 6, der Stangen 10, der Exzenterscheibe 30, und des Abrollelementes 40 sind über Dichtungen 15, 33, 37 durch Schutzbleche 8, staubdicht und gasdicht vom Sterilraum abgekapselt. Dabei sind die Schutzbleche 8 großflächig und im wesentlichen eben ausgeführt, so daß der Türbereich mit dem Türblatt 6 und die Schutzbleche 8 durch abbrausen mit Sterilium oder durch eine Kaltgassterilisation (H2O2) gereinigt werden können.

### Bezugszeichenliste:

- 2: Vorderwand
- 4: Beschickungsöffnung
- 6: Türblatt
- 8: Schutzblech
- 10: Stange
- 12: Gleitlager
- 14: Spindel
- 15: Dichtung
- 16: Elektromotor
- 18: Spindelhubantrieb
- 20: Welle
- 22: Initiator
- 24: Exzenter
- 25: statische Silikonprofildichtung
- 26: Gabelgelenk
- 28: Exzenterwelle
- 30: Exzenterscheibe
- 32: Gleitlager
- 33: Dichtung
- 34: Drehantrieb
- 35: Gleitlager
- 36: Hebelarm
- 37: Dichtung
- 38: Linearantrieb
- 40: Abrollelement

## Patentansprüche

1. Druckkammer einer Gefriertrocknungsanlage, einer autoklavierbaren Gefriertrocknungsanlage, eines Autoklaven, einer Sterilisationsanlage oder dergleichen mit einer in einer Vorderwand (2) der Druckkammer angeordneten Beschickungsöffnung (4), welche durch ein vertikal verschiebbares, beabstandet von der Vorderwand (2) angeordnetes Türblatt (6) verschließbar ist, und mit mindestens einer Andrückvorrichtung, die das Türblatt (6) in ihrer Verschließposition quer zur Bewegungsrichtung gegen die Vorderwand (2) drückt, um die Beschickungsöffnung (4) zu verschließen,
**dadurch gekennzeichnet**, daß die Andrückvorrichtung mindestens zwei seitlich des Türblattes (6) angeordnete Exzenter (24) aufweist, deren Exzenterscheiben (30) so angeordnet sind, daß sie mit dem Türblatt (6) in Eingriff bringbar sind.

2. Druckkammer nach Anspruch 1,
**dadurch gekennzeichnet**, daß zwischen dem Türblatt (6) und der Exzenterscheibe (30) ein Abrollelement (40) vorgesehen ist.

3. Druckkammer nach Anspruch 2,
**dadurch gekennzeichnet**, daß das Abrollelement (40) auf der Exzenterscheibe (30) drehbar gelagert ist.

4. Druckkammer nach Anspruch 3,
**dadurch gekennzeichnet**, daß ein zwischen der Exzenterscheibe (30) und dem Abrollelement (40) ausgebildeter Lagerspalt schmutzdicht gekapselt ist.

5. Druckkammer nach wenigstens einem der Ansprüche 2 bis 4,
**dadurch gekennzeichnet**, daß das Abrollelement (40) aus einem gehärteten, insbesondere randschichtgehärteten, Stahl hergestellt ist.

6. Druckkammer nach wenigstens einem der Ansprüche 1 bis 5,
**dadurch gekennzeichnet**, daß der Exzenter (24) in seiner Verriegelungsposition zwischen 0° und 90°, vorzugsweise 5°, überdreht ist.

7. Druckkammer einer Gefriertrocknungsanlage, einer autoklavierbaren Gefriertrocknungsanlage, eines Autoklaven, einer Sterilisationsanlage oder dergleichen mit einer in einer Vorderwand (2) der Druckkammer angeordneten Beschickungsöffnung (4), welche durch ein vertikal verchiebbares, beabstandet von der Vorderwand (2) angeordnetes Türblatt (6) verschließbar ist, und mit mindestens einer Andrückvorrichtung, die das Türblatt (6) in ihrer Verschließposition quer zur Bewegungsrichtung gegen die Vorderwand (2) drückt, um die Beschickungsöffnung (4) zu verschließen, insbesondere nach einem der vorhergehenden Ansprüche,
**dadurch gekennzeichnet**, daß das Türblatt (6) mittels mindestens einer zwangsangetriebenen, mit dem Türblatt (6) in Wirkverbindung stehenden Stange (10) vertikal verfahrbar ist, wobei die Stange (10) in einem Lager (12) axial verschiebbar und in diesem präzise geführt ist und wobei die Stange (10) aus einem elastischen Material hergestellt ist.

8. Druckkamer nach Anspruch 7,
**dadurch gekennzeichnet**, daß die Stange (10) optimal elastisch auf die Verschiebbarkeit und außerschwerpunktartige Aufhängung des Türblattes (6) ausgelegt ist.

9. Druckkammer nach wenigstens einem der Ansprüche 7 bis 8
**dadurch gekennzeichnet**, daß sich an einem aus dem Lager (12) herausragenden Ende der Stange (10) ein Spindel-Hubantrieb (18) anschließt.

10. Druckkammer nach wenigstens einem der vorhergehenden Ansprüche,
**dadurch gekennzeichnet**, daß die Vorderwand (2), mit Ausnahme des Türbereichs, mit einer Schutzverkleidung (8) versehen ist, hinter der die beweglich gelagerten oder mit Abrieb behafteten Funktionselemente angeordnet sind.

11. Druckkammer nach Anspruch 10,
**dadurch gekennzeichnet**, daß die Schutzwand (8) die beweglich gelagerten oder mit Abrieb behafteten Funktionselemente partikeldicht kapselt.
